Europäisches Patentamt

European Patent Office

Office européen des brevets

(11) Publication number: **0 066 983**
**A2**

# EUROPEAN PATENT APPLICATION

(21) Application number: 82302545.7

(22) Date of filing: 19.05.82

(51) Int. Cl.³: **G 06 F 3/14**

(30) Priority: **27.05.81 JP 80381/81**

(71) Applicant: **SORD Computer Systems, Inc., Isoma No.2 Building 42-12 Nishi-Shinkoiwa 4-chome, Katsushika-ku Tokyo (JP)**

(43) Date of publication of application: **15.12.82 Bulletin 82/50**

(72) Inventor: **Akihiko, Hiroishi c/o SORD Computer Systems, Inc. Isoma No. 2 Building 42-12 Nishi-Shinkoiwa, 4-chome, Katsushika-ku Tokyo (JP)**

(74) Representative: **Freed, Arthur Woolf et al, MARKS & CLERK 57-60 Lincoln's Inn Fields, London WC2A 3LS (GB)**

(84) Designated Contracting States: **DE FR GB**

(54) **Method of and apparatus for controlling the display of video signal information.**

(57) A video signal display control method and apparatus provide the display control functions for both CRT-type display devices (5) and LCD-type or other similar display devices (8) to be attached as output display units to an external microcomputer or other control systems (1) that provides output video signals (2). The display controller contains computer program codes for processing the output video signals (2) and permitting video signal information to be presented on a scaled-up size, on a scaled-down size, or as a partially extracted information on the physical screen of the display devices (5,8). The limitations on the performance of the external microcomputer (1) imposed by the inherent performance of the display devices (5, 8) have thus been eliminated, allowing for the optimum use of the microcomputer performance.

- 1 -

Method of and apparatus for controlling the display of video signal information

The present invention relates generally to a display control in a computer system and more particularly to a method of and an apparatus for controlling the display of video signal information on the display devices of different types which are usually connected as output devices to an external micro computer or other control systems for use in a process control application or other applications. The display devices to which the present invention applied are classified into two different groups of displays, one group including a monitor television (TV) receiver and a home-use television (TV) receiver that employ a cathode-ray tube (CRT) and the other group consisting of display units that employ a liquid crystal display (LCD) element and other similar display elements. Those display devices may provide output video signal information in visible character, tabulated, or graphical form.

In the process control field, for example, various types of display devices are used as visual output devices for presenting on their screens the video signal information which is delivered from their attached microcomputer or other process control system. It is also known that the display devices are used in other computer applications so as to provide an easy and direct means of a man-to-machine communication or interface. The display devices currently available in the computer system configuration range widely from the
television-type displays employing a CRT screen such as moni-
tor TV and home-use TV receivers to other display units of
the type that employs a liquid crystal display (LCD) element
and other similar display elements.  In most cases, those dis-
play devices provides a display of the output data of the
main computer system in a character form or graphical representation in colors or monochrome.  When a computer system is
configured to include display units, the display devices are
usually connected to the central processor (CPU) through appropriate channels and display controls.  In this case, the
display controls only provide the sequence control and buffering facilities.  All the display devices mentioned above that
are available for commercial use, however, have hardware and
software limitations on their display capabilities.  In other
words, the number of characters, the kind of colors, and the
contents of graphical representation such as shapes, graphs,
etc. that the display devices are capable of presenting at a
time on their screens are all limited.  The conventional dis-
play controls are not designed to provide such control functions as to permit the display devices to display all output
information at a time as required.  The performance or capabilities of the computer system are restricted by the hardware and software limitations on the display devices, and
therefore cannot be utilized completely or effectively.
When the operation of the computer system involves the operation of the display devices; therefore, the optimum use of the computer performance or functions is practically impossible, leaving the most part of its performance not utilized. When the computer system provides output video signals, the display device that can display the video signal information is limited to the type of display device which employ a CRT screen, such as monitor television receiver and home-use television receiver. If it is desired that the video signal information be displayed on the other types of display devices that employ an LCD element or other similar display element, appropriate hardware and software implementation must be built in the microcomputer package in order to handle. or process the video signals to allow those display devices to display the visual information based on the processed video signals. However, a great amount of development efforts and costs must be required for this implementation.

In view of the problems and disadvantages of the prior art technology, the principal object of the present invention is therefore to provide a display controller which is a package of hardware and software designed to control both the CRT displays and the LCD (and other display element) displays. The display controller, which operates independently of the conventional display controls, incorporates the computer microprogrammed functions or instructions such as information transfer, arithmetic operation, logical operation, shifting, branching, and other subroutine for processing the output video signals of the external microcomputer system being used in particular computer applications. The internal computer functions or instructions of the display controller are microprogrammed and stored in memory. The execution of the instructions by the computer (CPU) section in the display controller causes the video signals to be processed so that the information represented by the video signals can be displayed on the particular display devices. In order to display the video signal information, specific display drivers are provided for each of the two different types of displays, and are operated by the processed video signals so that the video signal information can be presented on the corresponding display types. Through the internal processing of the video signals within the display controller, it is thus possible to cause both display type to select and display any required portion of the video signal information from a virtual display space which is created by the output video signals of the external microcomputer. As a result, the present invention has solved the problems of the prior art by eliminating the above described limitations in the performance of the display devices and by thus making it possible to take full advantage of the performance of the external microcomputer. The present invention also provides for the possibility of further improving the microcomputer performance. It should particularly be noted that for the LCD or other similar displays being used, the present invention eliminates the need of developping the special hardware and software to be implemented in the external microcomputer to which those displays are to be attached. If
the external microcomputer is designed to provide video signal
output, the display controller according to the present invention enables even those display types employing LCD or the like
elements to display video signal information on their screens
by attaching through the display controller to the external
microcomputer.


Those and other objects and advantages of the present
invention will become apparent from the following description
that will be given in detail by referring to the preferred
embodiments of the invention as illustrated in the accompanying
drawings, in which:

FIG. 1 in a block diagram showing the overall configura-
tion of the system and the arrangement of the internal elements
in the display controller package according to the present invention; and

FIG. 2 is a display screen diagram according to the
present invention, illustrating the relationship between the
virtual display screen or space created by the video signals
and the physical display screen on the display devices on
which video signal information is to be displayed as scaled-
up, scaled-down, or partially extracted in relation to the
virtual display screen.

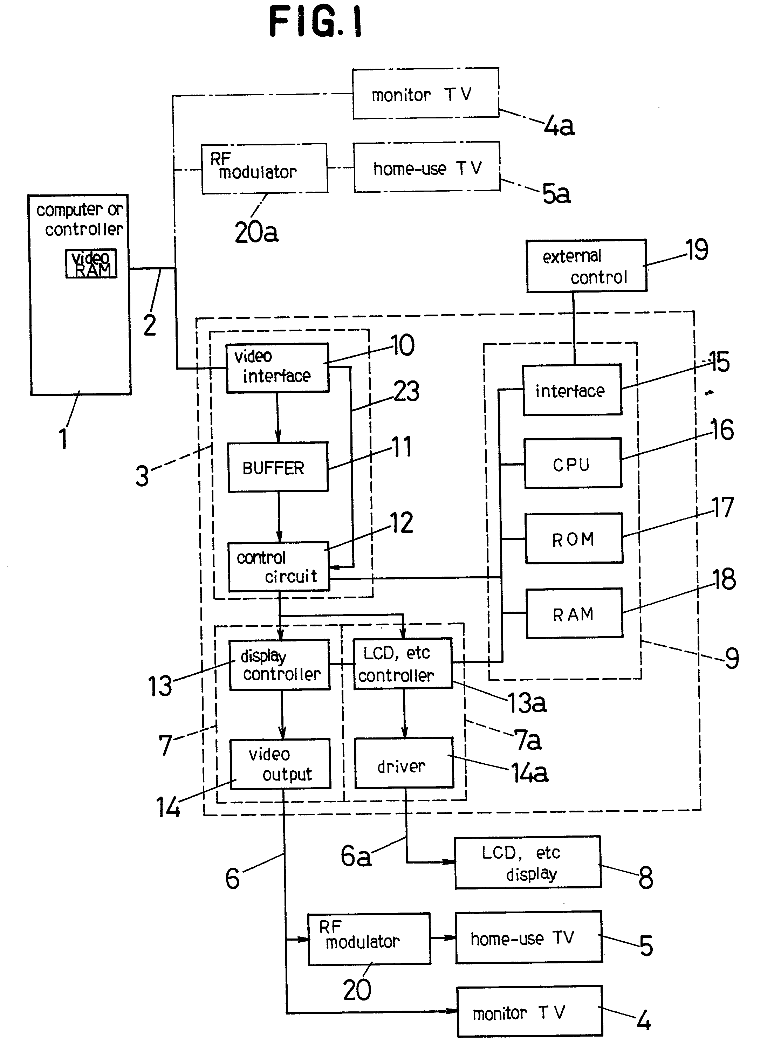

FIG. 1 shows a block diagram in which two different types of display devices are attached through the display controller to an external microcomputer or other control system 1 which is used in a process control in this example. As described earlier, the display devices to which the present invention applies are two different groups, one consisting of CRT (cathode-ray tube) displays such as monitor TV and home-use TV sets, and the other consisting of displays that employ LCD (liquid crystal display) and the like elements. In one form of the preferred embodiment of the present invention as. shown in FIG. 1, the display controller is packaged in one unit, and includes an input section 3 to which video signals 2 (composite signals or R.G.B. signals) are to be applied from the external microcomputer 1, a first output section 7 which is connected to the output of the input section 3 and provides output video signals 6 for enabling the CRT displays 5 (monitor TV or home-use TV unit) to be operated for the display, a second output section 7a which is also connected to the input section 3 and provides output signals 6a other than the video signals for enabling the LCD, etc. displays to be operated for the display, and a control section 9 which provides the microprogrammed control functions for the input section 3 and the first and second output sections 7 and 7a. Each of the sections of the display controller is then illustrated specifically. The input section 3 comprises a video signal interface 10 which serves as a connector between the external microcomputer 1 and the display controller according to the invention, a buffer 11 which is connected to the interface 10, and a control circuit 12 connected to the output of the buffer 11. Reference numeral 23 denotes a control signal bus. The control circuit 12 is operated under control of the control section 9 which is later to be described in detail, so that the input video signals 2 through the video signal interface 10 and buffer 11 can be applied into the control circuit 12. The first output section 7 for the CRT displays 4 and 5 includes a display control 13 and a video output driver 14 which is controlled by the display control 13 to provide output video signals for the CRT displays. Functionally, the display control 13 is operated under control of the control section 9 so that the display control 13 can receive the output video signals 2 of the control circuit 12 in the input section 3 and provide drive signals for the video output driver 14. In response to the drive signals, the driver 14 provides output of video signals, driving the CRT displays for displaying the corresponding video signal information on the screen. Similarly, the second output section 7a for the LCD, etc. displays includes a display control 13a and a driver 14a which is controlled by the display control 13a to provide output signals other than the video signals for the LCD, etc. displays. The functions of the display control 13a and driver 14a are similar to those of the display control 13 and driver 14 in the first output section 7, except that the former handles non-video signals. The control section 9 which provides the microcoded control functions for the control circuit 12 and display controls 13 and 13a comprises an interface
15 to an external control device 19, a central processor (CPU)
16, a read-only memory (ROM) 17, and a random-access memory
(RAM) 18, the CPU, ROM and RAM being connected in parallel to
the interface 15. It is known per se that the CPU 16 executes
the microprogrammed codes contained in ROM 17 and/or RAM 18,
and performs the computer functions corresponding to the microprogrammed code sequences, such as information transfer, arithmetic operation, logical operation, shift operation, branch
operation, and other subroutine calls. Those computer functions or instructions are specifically implemented to process
the video signals supplied from the external microcomputer.
However, as the present invention is not directed to the implementation of such software, its description is omitted. The
concept of the invention is only illustrated.

Through the internal processing of the video signals or
other signals transferred from the control circuit 12 to the
display controls 13 and 13a, in accordance with the above internal computer functions, the control section 9 establishes
relationships between the input signals 2 and output signals 6
and 6a, such that actual information can be displayed on a
scale of 1:1, on a scaled-up size, on a scaled-down size, or
as partially extracted. Those scale relationship and partial
extraction between input and output signals can be given by
the operation of the external control device 19 which is connected to the interface 15 within the control section 9. In
the embodiment shown, the external control device 19 is located outside the control section 9, but it may be possible to incorporate it within the control section 9. In FIG. 1, reference numeral 20 designates a radio frequency (RF) modulator. Dot-dashed blocks indicate the configuration of the prior art display subsystem which is directly attached to the video signal output of the external microcomputer 1 without the interposed display controller of the present invention. As shown, the prior art display subsystem consists of a monitor TV receiver 4a directly connected to its microcomputer 1 or a home-use TV receiver 5a connected through RF modulator 20a to the microcomputer 1.

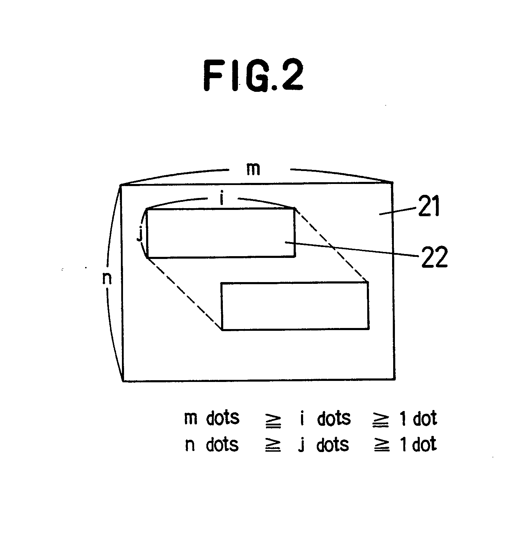

In the above described embodiment, the external microcomputer or other control system 1 provides a virtual display space created by video signals 2 which are stored in its internal video RAM((random-access memory), from which any required scale or portion of visual information can selectively be displayed on the physical screen of any of the monitor TV receiver 4, home-use TV receiver 5, and the LCD and other similar displays. The display devices that employ an LCD element or other similar display elements include a plazma display, LED (light emitting diode) display, fluorescent display and the like. Generally, the screen capacity or the number of characters, etc. that those display types 8 can display at a time on the screen is smaller than that of the CRT displays 4 and 5, thus limiting the amount of information displayable at a time. If the entire system is configured to include the particular display types 8 as output devices, it is an effective method to permit the display devices 8 to present any portion of information as required, by selectively extracting it from the virtual display space created by the video signals of the external microcomputer 1. FIG. 2 illustrates the relationship between the physical screen size and the virtual screen size. In FIG. 2, a virtual display screen is designated by reference numeral 21, which represents a virtual display space with a matrix of m x n dots created by the output video signals 2 of the external microcomputer 1. The physical screen 22 on the LCD, etc. displays 8 has a smaller size than the virtual display screan or space 21, as indicated by a matrix of i x j dots. The physical screen 22 may be fixed on a certain area of the virtual display screen 21, or may be scrollable within the range of the virtual display screen 21. If the display on the physical screen 22 is fixed, it is possible to display only the portion of information that is required at present on the fixed area of the screen 22, with additional portions of the information being displayed on the remaining areas of the screen 22 whenever they are required. If the physical screen 22 is capable of scrolling up or down and scrolling right or left, it is possible to display all required information at a time on the physical screen 22, as the physical screen 22 can contain the amount of information equal to the virtual display space. In either case, this can be accomplished without effecting the video signals 2 of the external microcomputer 1.

Although it may also be possible to display a great amount of video signal information on the small physical screen 22 by varying the output video signals 2 of the external microcomputer 1, it is necessary to change or add the hardware and software of the external microcomputer to match the requirements of the display devices 8. The present invention eliminates the need of doing so. According to the present invention, any desired amount of information can be displayed on the physical screen without causing the external microcomputer 1 to vary the video signals 2. For the graphical representation application in particular, many calculations are required to obtain the x, y coordinates of the display if the content being dis-played is to be changed or moved by varying the video signals 2. In accordance with the present invention, however, such change or movement can be achieved by partially extracting any desired portion of graphical information from the virtual dis--play space. This can be done very simply and at a high speed.

The prior art display subsystem will become very costly when the display containing a matrix of m x n dots is to be presented on the physical screen 22. In some cases, with the CRT displays currently available, this display is practically impossible. The display control method provided by the present invention permits even the inexpensive CRT display devices to provide a fine or high-resolution display, since it permits a partial extraction of the information to be displayed.

It has been described hereinabove that the relationship between the physical screen size 22 of the CRT and LCD etc. displays 4, 5 and 8 and the virtual display screen size 21 created by the video signals 2 is established as a scale of 1:1, and that the display includes a full-screen display and a partial screen display. It is also possible to provide a scaled-up display or scaled-down display with respect to the virtual display screen (without affecting the video signals). If the content of the video signal virtual display space is dynamically changing, it is also possible to pick out on retrieve a particular image at a given time and display it as a still picture on the physical screen.

The operation of the control section 9 takes place in accordance with the software programs just like the usual computer system. In addition to its display control functions described above, the control section 9 may provide other functions. For the display of partially extracted information, the information or message which indicates the location where a particular information has been extracted or retrieved can be displayed on another output device or on certain screen areas of the same display device. A tabulation consisting of columns and rows can overlap the information being displayed. The control section 9 may be programmed to generate audio voices along with the corresponding characters being displayed on the screen.

A video printer may be used in place of the LCD or like displays 8. The printer can provide a hardcopy print out of the output video signals 2 from the external microcomputer 1.

As clearly seen from the foregoing description, the present invention provides several advantages over the prior art technology. One advantage is that the whole or part of the output visual information from the external microcomputer or other control system can be presented on a scale of 1:1, on a scaled-up size, on a scaled-down size, or as partially extracted, on the physical screen of the LCD or other similar displays as well as the CRT displays including the monitor TV and home-use TV receivers. This display can be provided without affecting or varying the output video signals of the external microcomputer. Another advantage derived from the above feature is the optimum or selective use of all the functions or performance of the external microcomputer without being restricted by the performance of the display devices.

Although the present invention has fully been described by way of the shown preferred embodiments thereof, it should be understood that various changes and modifications may be made without departing from the spirit and scope of the invention.

- 14 -

0066983

CLAIMS

1. A method of displaying output video signal information from an external microcomputer or other control system (1) on output display devices which are grouped into CRT displays (5) such as monitor TV and home-use TV receivers, and LCD or other similar displays (8), comprising the steps of: --

applying said output video signals (2) to a display controller (13) containing microprogrammed instruction codes for processing said output video signals (2), such as information transfer, arithmetic operation, logical operation, shifting, branching and other subroutines;

processing said video signals (2) by causing said display controller (13) to execute said microprogrammed instruction codes; and

driving the output display devices. (5, 8) for displaying the corresponding video signal information in response to said processed video signals (6, 6a).

2. A method according to Claim 1, wherein said processing of said output video signals (2) by said display controller (13) in accordance with the microcoded functions comprises the processing that causes a virtual display space created by said output video signals (2) to be presented on a scaled-up size, on a scaled-down size, or as a partially extracted information on the physical screen of the display devices (5, 8).

3. A method according to Claim 2, wherein said process of partially extracting the video signal information from said virtual display space comprises displaying the partially extracted

0066983

information in a fixed mode or in a scroll mode on the screen (5, 8).

4.   A display controller for CRT displays (5) and LCD or other similar displays (8), which comprises: --

an input section (3) for receiving output video signals (2) of an external microcomputer or other control system (1) to which the display devices (5, 8) are attached;

a first output section (7) responsive to said input section (3) for providing output drive video signals (6) for the CRT devices (5);

a second output section (7a) responsive to said input section (3) for providing output drive signals (6a) for the LCD or other similar display devices (8); and

a control section (9) containing microprogrammed instruction codes such as information transfer, arithmetic operation, logical operation, shifting, branching, and other subroutine for controlling said input section (3) and said first and second output sections (7, 7a).

5.   A display controller according to Claim 4, wherein said second output section (7a) is an output section for operating a video printer.

FIG.1

$^{1}/_{2}$

0066983

# FIG.2

m dots $\geqq$ i dots $\geqq$ 1 dot

n dots $\geqq$ j dots $\geqq$ 1 dot